# EUROPÄISCHE PATENTANMELDUNG

(11) **EP 4 556 725 A2**
(43) Veröffentlichungstag der Anmeldung: **21.05.2025**
(21) Anmeldenummer: 23020215.2
(22) Anmeldetag: 22.02.2021
(51) Int. Cl.: F16B 13/00

(54) **ABHÄNGEVORRICHTUNG ZUM ABHÄNGEN VON GEGENSTÄNDEN**

(62) Teilanmeldung aus: 21020082.0
(71) Anmelder: Jungel-Schmid, Johannes, 1100 Wien (AT)
(72) Erfinder: Jungel-Schmid, Johannes, 1100 Wien (AT)
(74) Vertreter: Keschmann, Marc

(57) **Zusammenfassung**

Bei einer Abhängevorrichtung zum Abhängen von Gegenständen, wie z.B. Leuchten, von einer Raumdecke, umfassend ein deckenseitiges Aufnahmeteil und ein an diesem befestigbares Abhängemittel (10), wie z.B. ein Abhängeseil, ist das deckenseitige Aufnahmeteil als in die Decke versenkbares Einschraubteil (1, 14, 23, 24) ausgebildet, welches eine nach unten offene Aufnahme (4, 26) aufweist, und dass das Abhängemittel (10) ein Befestigungsstück (12, 25) aufweist, welches von unten in die Aufnahme (4, 26) einführbar ist.

## Beschreibung

Die Erfindung betrifft eine Abhängevorrichtung zum Abhängen von Gegenständen, wie z.B. Leuchten, von einer Raumdecke, umfassend ein deckenseitiges Aufnahmeteil und ein an diesem befestigbares Abhängemittel, wie z.B. ein Abhängeseil.

Abhängevorrichtungen dienen dem Abhängen von verschiedenen Gegenständen von Raumdecken, wobei die Abhängung meist unter Verwendung von Seilen, Ketten, Stangen und dgl. erfolgt. Abhängevorrichtungen werden beispielswiese für das Abhängen von Einzel-Leuchten oder dekorativen Einzelelementen, Stromschienen, Lichtbändern und mehrteiligen Lichtstrukturen, aber auch von Leuchten in Kombinationen mit dekorativen Elementen, wie z.B. Kristallen, Glaskörpern, etc., die selbst kein Leuchtmittel/Lichtquelle enthalten, aber in Summe ein Objekt bilden, verwendet.

Bei herkömmlichen Abhängesystemen wird an der Decke ein deckenseitiges Aufnahmeteil befestigt, an dem das Abhängemittel bereits zuvor befestigt wurde oder an dem das Abhängemittel nach erfolgter Deckenbefestigung angebracht wird. Die Anbringung des deckenseitigen Aufnahmeteils erfolgt üblicherweise als Aufputzinstallation mit Hilfe geeigneter Befestigungsmittel, wie z.B. Schrauben. Der Vorteil der Aufputzmontage ist die einfache Durchführung mit Hilfe allgemein verfügbarer Werkzeuge. Nachteilig jedoch ist, dass solche deckenseitigen Aufnahmeteile hinsichtlich ihrer Ästhetik als störend empfunden werden, da sie dem auf optischer Leichtigkeit und Unauffälligkeit beruhenden Konzept abgehängter Systeme widersprechen. Insbesondere bei Abhängungen, die eine Mehrzahl von Abhängeseilen und eine dementsprechende Mehrzahl von deckenseitigen Befestigungspunkten erfordern, entsteht durch die Aufputzanordnung von mehreren Aufnahmeteilen oder eines einzigen, jedoch entsprechend großflächigen Aufnahmeteils eine nachteilige ästhetische Wirkung.

Alternativ sind Befestigungssysteme bekannt geworden, bei denen das deckenseitige Aufnahmeteil als Einputzelement oder als Teil desselben ausgebildet ist. Ein solches Einputzelement wird beispielsweise in einer Ausnehmung einer Gipskartondecke angeordnet und danach durch Anbringen von Verputzmaterial flächenbündig fixiert, sodass von der Decke vorstehende Bauteile vermieden werden. Das Aufnahmeteil ist zwar deckenbündig angeordnet und daher in ästhetischer Hinsicht eine deutliche Verbesserung gegenüber einer Aufputzmontage, aber weiterhin sichtbar. Wünschenswert wäre es jedoch, wenn die Abhängemittel direkt aus der Raumdecke kommen würden, sodass das Aufnahmeteil völlig unsichtbar ist.

Die vorliegende Erfindung zielt daher darauf ab, eine Abhängevorrichtung der eingangs genannten Art dahingehend weiterzubilden, dass es höchsten ästhetischen Ansprüchen genügt und lediglich das Abhängemittel, wie z.B. das Abhängeseil sichtbar ist.

Zur Lösung dieser Aufgabe sieht die Erfindung bei einer Abhängevorrichtung der eingangs genannten Art vor, dass das deckenseitige Aufnahmeteil als in die Decke versenkbares Einschraubteil ausgebildet ist, welches eine nach unten offene Aufnahme aufweist, und dass das Abhängemittel ein Befestigungsstück aufweist, welches von unten in die Aufnahme einführbar ist. Dadurch, dass das deckenseitige Aufnahmeteil als in die Decke versenkbares Einschraubteil ausgebildet ist, kann dieses durch einen einfachen Eindrehvorgang in der Decke befestigt und dabei soweit eingedreht werden, dass es in die Decke versenkt wird, d.h. gegenüber der raumseitigen Oberfläche der Decke zurückversetzt ist. Der durch den Rücksprung entstehende Hohlraum kann durch Verputzmasse gefüllt und dadurch ein deckenbündiger Abschluss erreicht werden. Die Verputzmasse wird dabei um das vom Aufnahmeteil herabhängende Abhängemittel herum aufgebracht, sodass die Verputzmasse ein Loch freilässt, dessen Abmessungen dem Abhängemittel angepasst ist. Von unten betrachtet ist hierbei lediglich das aus dem Loch kommende Abhängemittel sichtbar.

Um das Eindrehen in die Decke zu ermöglichen, ist das Einschraubteil vorzugsweise mit einer außenliegenden, zumindest abschnittsweise schraubenlinienförmigen Struktur versehen, die beim Eindrehen um eine Drehachse ein Eindringen des Einschraubteils in Richtung der Drehachse in die Decke bewirkt.

Dadurch, dass das deckenseitige Aufnahmeteil eine nach unten offene Aufnahme aufweist, kann das Befestigungsstück des Abhängemittels in das bereits in die Decke montierte Aufnahmeteil eingeführt und dort befestigt werden. Das Eindrehen des deckenseitigen Aufnahmeteils in die Decke kann daher in einem Zustand erfolgen, in dem das Abhängemittel noch nicht angebracht ist, sodass das Eindrehen mit Hilfe eines von unten angesetzten Eindrehwerkzeugs erfolgen kann, ohne dass dies durch das Abhängemittel beeinträchtigt wird. Bevorzugt weist das deckenseitige Aufnahmeteil zu diesem Zweck an einer nach unten gerichteten Stirnfläche eine Werkzeugaufnahme, wie z.B. einen Innensechskant, einen Kreuzschlitz, oder dgl., zum formschlüssigen Eingreifen eines Eindrehwerkzeugs auf.

Für das Befestigen des Befestigungsstücks in der Aufnahme des deckenseitigen Aufnahmeteils ist gemäß einer bevorzugten Ausführungsform vorgesehen, dass die Aufnahme und das Befestigungsstück miteinander zusammenwirkende Verbindungsmittel aufweisen.

Die Verbindungsmittel können hierbei bevorzugt zur Herstellung einer Gewindeverbindung, einer magnetischen Verbindung oder einer stoffschlüssigen Verbindung ausgebildet sein.

Für die Ausbildung einer Gewindeverbindung weist das Verbindungsmittel des Einschraubteils bevorzugt ein in der Aufnahme ausgebildetes Sackloch mit einem Innengewinde auf. Das Befestigungsstück des Abhängemittels weist in diesem Fall ein korrespondierendes Außengewinde auf, welches von unten in das Innengewinde des Einschraubteils eingedreht werden kann. Die Gewindeverbindung kann vorzugsweise mit einer chemischen Gewindesicherung in kristalliner Form versehen sein, die sich beim Eindrehen verflüssigt und sich nach erfolgtem Eindrehen zur Ausbildung der chemischen Gewindesicherung zu einem Kleber verfestigt.

Eine stoffschlüssige Verbindung des Befestigungsstücks mit dem deckenseitigen Aufnahmeteil kann beispielsweise mittels eines geeigneten Klebstoffs erreicht werden.

Alternativ kann auch eine Rastverbindung vorgesehen sein, bei der ein federnd angeordneter Teil in eine Rastposition schnappen kann, in der das Befestigungsstück des Abhängemittels durch Formschluss in der Aufnahme des Aufnahmeteils gehalten wird.

Alternativ kann das deckenseitige Aufnahmeteil einen Spreiz-Innenteil aufweisen, der durch einen Pressteil des Abhängemittels nach dem Einschlagen mittels eines z.B. geschlitzten Durchschlages kraft- und formschlüssig verformt wird.

Weiters kann das deckenseitige Aufnahmeteil mit einer selbstverriegelnden Mechanik ausgestattet sein, in welche lediglich das bloße Seilende von unten eingeschoben werden muss, wo es verriegelt wird, z.B. nach dem Prinzip der Selbsthemmung.

Für die Befestigung an dem deckenseitigen Aufnahmeteil benötigt das Abhängemittel an seinem Ende ein Halteteil, das mit dem Abhängemittel starr verbunden ist, wie z.B. durch Aufpressen, Verschweißen oder Löten. Das Halteteil definiert hierbei die Zuglast des Abhängemittels. Das Halteteil kann von dem oben genannten Befestigungsstück gebildet sein oder ein von Befestigungsstück gesondertes Bauteil darstellen. Im ersten Fall ist das Halteteil mit Verbindungsmitteln zum Befestigen des Halteteils an dem deckenseitigen Aufnahmeteil ausgestattet und kann beispielsweise als zylindrisches Gewindestück mit zwei gegenüber liegenden Sacklöchern als Antrieb zum Eindrehen oder als Zylinder mit einer Bajonett-Kulisse an der Zylinderfläche ausgebildet sein. Im zweiten Fall kann bevorzugt vorgesehen sein, dass das am Ende des Abhängemittels angeordnete Halteelement eine Anlagefläche für das gesonderte Befestigungsstück des Abhängemittels ausbildet. Das Befestigungsstück kann beispielsweise als auf das Abhängemittel, wie z.B. das Abhängeseil, auffädelbare Gewindehülse ausgebildet sein, auf welcher das Halteteil samt dem Abhängemittel und der daran hängenden Last über die genannte Anlagefläche abgestützt ist.

Das deckenseitige Aufnahmeteil kann an den jeweiligen Deckenaufbau angepasst sein und beispielsweise für das Einschrauben in eine Hohldecke anders ausgebildet sein als für das Einschrauben in eine Massivdecke.

Im Fall einer Massivdecke ist das Einschraubteil als Schraube mit einem Außengewinde zum Einschrauben in die Raumdecke oder einen in der Raumdecke angeordneten Dübel ausgebildet. Insbesondere kann das Einschraubteil hierbei als Stiftschraube ausgebildet sein, die in einem bevorzugt gewindelosen Endbereich mit der Aufnahme für das Abhängemittel versehen ist. Der Endbereich weist dabei im Wesentlichen denselben Außendurchmesser auf wie der mit dem Außengewinde versehene Schraubenschaft, sodass die Stiftschraube keinen verbreiterten Schraubenkopf aufweist. Dies führt dazu, dass das Einschraubteil beim Eindrehen in die Decke versenkt werden kann. Nach dem Versenken des Einschraubteils wird das Abhängemittel in der Aufnahme des Einschraubteils befestigt und im Anschluss daran wird um das Abhängemittel herum gespachtelt, sodass optisch nur mehr das Abhängemittel, wie z.B. das Abhängeseil zu sehen ist, welches aus der Decke kommt. Das Einschraubteil kann hierfür am Abschluss eine Hinterschneidung aufweisen, damit sich die Spachtelmasse formschlüssig mit der Decke verbindet.

Im Fall einer Hohldecke, wie z.B. einer abgehängten Gipskartondecke, ist die Schraube gemäß einer nicht erfindungsgemäßen Ausführungsform derart ausgebildet, dass das Außengewinde an einem Schraubenkopf der Schraube ausgebildet ist. Das Außengewinde kann hierbei beispielswiese als selbstschneidendes Gewinde ausgebildet sein, das sich beim Eindrehen in die Decke in dem üblicherweise relativ weichen Material der Zwischendecke verankert. Das Außengewinde kann hinsichtlich seiner Ausformung und auch Steigung auf das Deckenmaterial abgestimmt sein und ist vorzugsweise ähnlich dem Gewinde einer Trockenbauschraube für Gipskarton oder dem einer Holzschraube ausgebildet. Für den Fall, dass das Außengewinde zylindrisch ist, kann es mindestens eine Tasche zur Aufnahme von Deckenmaterial aufweisen, das beim Schneiden des Gewindes in die Deckenplatte anfällt.

Für das Einschrauben der Schraube in die Zwischendecke ist in den Schraubenkopf bevorzugt zentrisch ein Schraubenantrieb eingearbeitet, wie z.B. ein TORX T40-Antrieb. Tiefer als der Schraubenantrieb kann hierbei ein Sackgewinde in den Schraubenkopf gehen, welches die Aufnahme für das Befestigungsstück des Abhängungsmittels bildet.

Die Bauteilhöhe des Schraubenkopfes ist vorzugsweise auf die Plattenstärke der Zwischendecke abgestimmt, insbesondere etwas geringer als die Plattenstärke gewählt.

Um einen zusätzlichen Halt des Einschraubteils in der Zwischendecke zu erreichen, sieht eine nicht erfindungsgemäße Ausführungsform vor, dass auf einen mit einem Außengewinde versehenen Schraubenschaft der Schraube ein Kippanker aufgeschraubt ist. Der Schraubenschaft weist hierbei einen (wesentlich) geringeren Durchmesser als der Schraubenkopf auf. Der Kippanker ist dazu vorgesehen, in den hinter der Zwischendecke liegenden Hohlraum eingebracht zu werden, um sich dort an dem das Bohrloch umgebenden Bereich der Zwischendecke abzustützen und die Zwischendecke auf diese Weise gleichsam zu hintergreifen. Um den Anker durch das Bohrloch in den Hohlraum einführen zu können, ist dieser wie an sich bekannt als Kippanker ausgeführt. Der Kippanker wird nach erfolgtem Einführen in den Hohlraum um 90° relativ zum Schraubenschaft verschwenkt. Danach wird der Kippanker, der mittels einer Gewindeverbindung am Schraubenschaft befestigt ist, durch Drehen der Schraube an die Rückseite der Zwischendecke herangezogen, bis die Schraube festgezogen ist.

Eine vorteilhafte Ausführung sieht hierbei vor, dass das am Schraubenkopf ausgebildete Außengewinde und das am Schraubenschaft ausgebildete Außengewinde dieselbe Gewindesteigung aufweisen. Dies führt beim Drehen der Schraube gleichzeitig zu dem oben beschriebenen Festspannen des Kippankers und zu einem Eindrehen des Schraubenkopfes in die Zwischendecke. Insbesondere erfolgt die Montage dabei derart, dass die Schraube zuerst soweit gedreht wird, bis der Kippanker an der Rückseite der Zwischendecke anliegt, und dann weiter gedreht bzw. angetrieben wird, vorzugsweise mit einem Elektro-Handwerkzeug wie einem Akkuschrauber mit Rutschkupplung, sodass sich das am Schraubenkopf ausgebildete Außengewinde selbst in die Deckenplatte einschraubt und sich mit dieser verbindet. Gleichzeitig geht der Kippanker "auf Zug".

Der Kippanker ist bevorzugt als U-Profil ausgebildet, damit der Kippanker im an den Schraubenschaft angelegten Zustand für das Einführen durch das Bohrloch der Zwischendecke wenig Platz benötigt. Die Ausbildung ist dabei bevorzugt so getroffen, dass der Schraubenschaft im angelegten Zustand des Kippankers zwischen die Schenkel der U-Form des Kippankers zu liegen kommt.

Alternativ kann auch ein anderes Profil als ein U-Profil verwendet werden, das durch Anziehen im Deckenhohlraum an die Deckenplatte gezogen wird. Alternativ kann statt eines Kippankers ein anderes Spannmittel vorgesehen sein, wie z.B. eine sich bei Drehung der Schraube auffaltende oder aufspreizende Struktur.

Die Seilabhängung der vorliegenden Erfindung kann alternativ auch dazu verwendet werden, um ein schräg oder horizontal gespanntes Seil an einer Decke, einer Wand, einem Boden oder einem Raumtrennelement eines Raums zu verankern. Weiters ist es denkbar, das erfindungsgemäße Verankerungssystem zur Verankerung von senkrecht gespannten Seilen, z.B. Seile als Absturzsicherungen bei Geländern, einzusetzen. Es könnten in dieser Art auch dünne Gewindestangen oder Stäbe mit Gewindeabschluss an einer Decke, Wand oder am Boden befestigt werden.

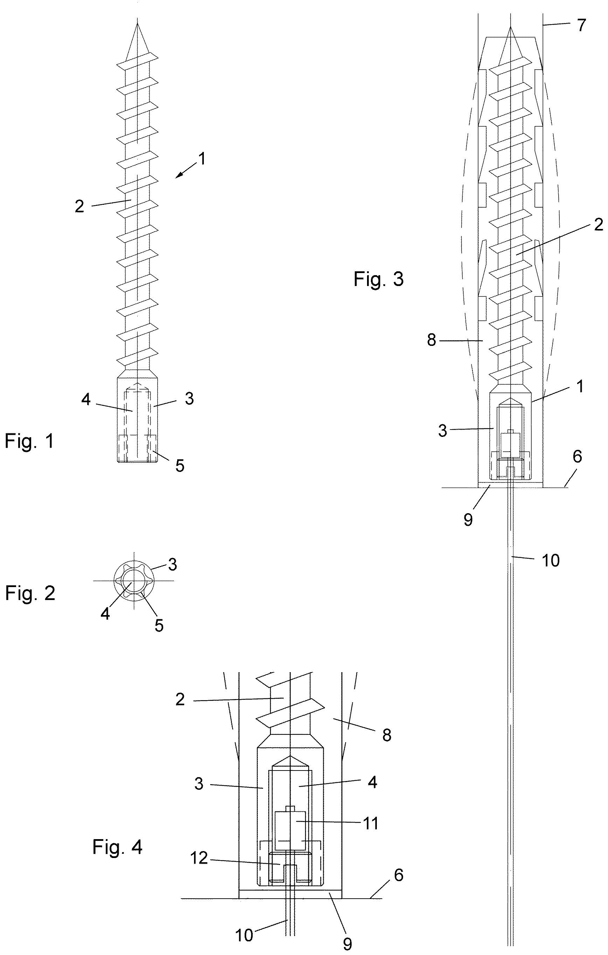

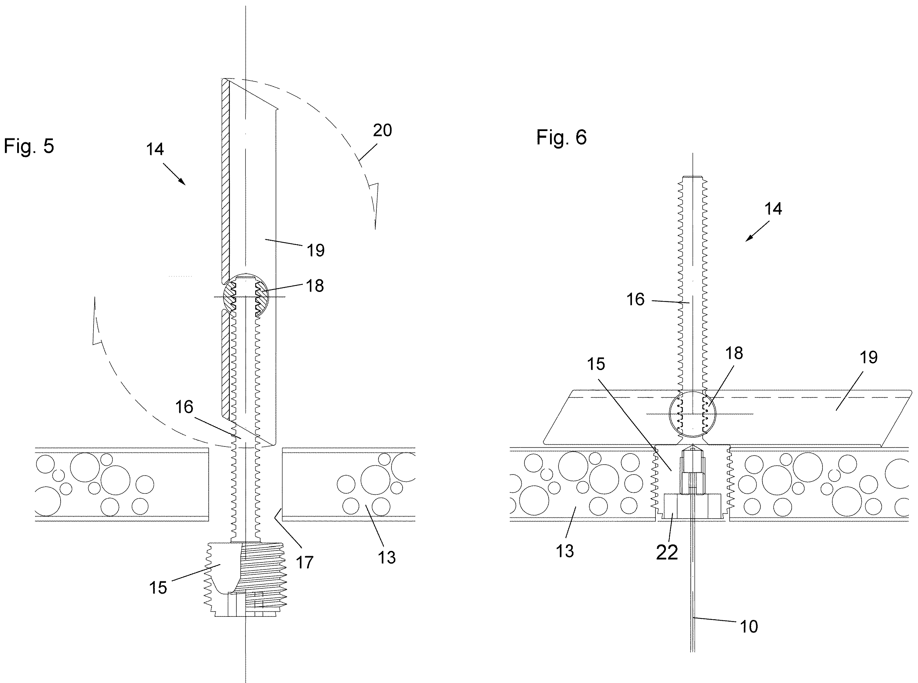

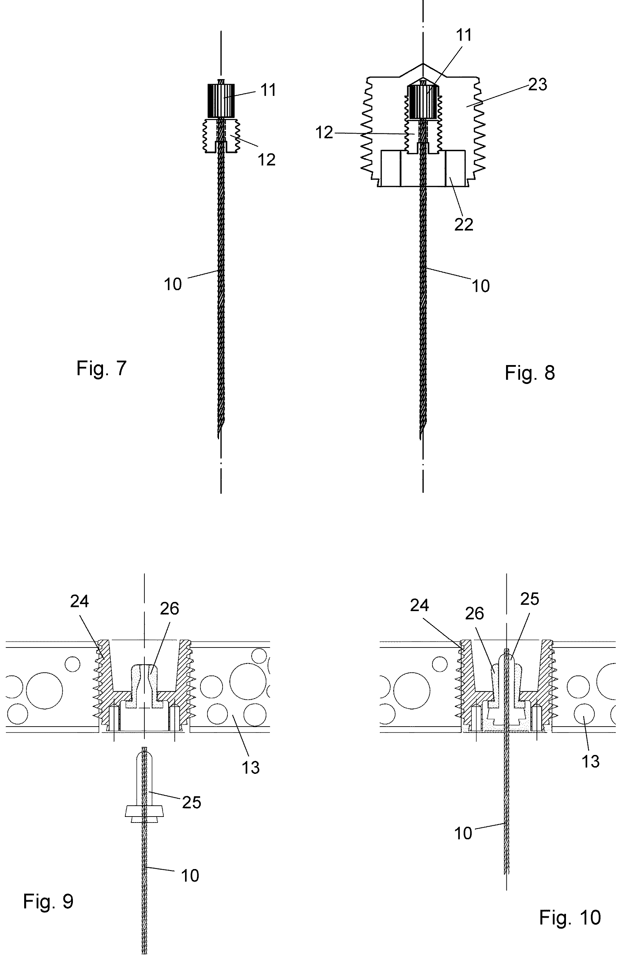

Die Erfindung wird nachfolgend anhand eines in der Zeichnung dargestellten Ausführungsbeispiels näher erläutert. In dieser zeigen Fig. 1 eine Schraube für eine Massivdecke als Teil einer Abhängevorrichtung, Fig. 2 eine Ansicht des Schraubenkopfes der Fig. 1, Fig. 3 die Schraube gemäß Fig. 1 in einem in die Decke eingeschraubten Zustand, Fig. 4 eine vergrößerte Ansicht der Fig. 3, Fig. 5 eine Schraube für eine Hohldecke während des Montagevorgangs gemäß einer nicht erfindungsgemäßen Ausführungsform, Fig. 6 die Schraube gemäß Fig. 5 in montiertem Zustand, Fig. 7 eine Detailansicht eines Abhängeseils mit Befestigungsstück, Fig. 8 eine Darstellung des Abhängeseils gemäß Fig. 7 in montiertem Zustand, Fig. 9 eine alternative Befestigung des Abhängeseils im deckenseitigen Aufnahmeteil vor der Montage und Fig. 10 die Ausführung gemäß Fig. 9 in montiertem Zustand.

Fig. 1 zeigt ein deckenseitiges Einschraubteil in Form einer Stiftschraube 1, die einen mit einem Gewinde versehenen Schraubenschaft 2 und einen gewindelosen Endabschnitt 3 aufweist. Der Endabschnitt 3 umfasst eine nach unten offene Aufnahme 4, welche als Sackbohrung mit Innengewinde ausgeführt ist. Weiters ist in den Endabschnitt 3 zentrisch ein Schraubenantrieb 5 eingearbeitet, beispielsweise in einer TORX-Ausführung wie dies in Fig. 2 dargestellt ist.

In Fig. 3 ist die unter Oberfläche einer Raumdecke mit 6 bezeichnet, wobei in die Massivdecke ein Bohrloch 7 eingebracht wurde. Im Bohrloch 7 ist ein Dübel 7 angeordnet, der gegenüber der Deckenfläche 6 zurückversetzt ist. In den Dübel wurde die Stiftschraube 1 eingedreht, und zwar so weit, dass sie ebenfalls gegenüber der Deckenfläche einen Versatz 9 aufweist. Weiters ist in Fig. 3 ersichtlich, dass ein Abhängeseil 10 mit Hilfe eines Befestigungsstücks 12 in der Aufnahme 4 befestigt ist.

In der Detaildarstellung gemäß Fig. 4 ist erkennbar, dass das Befestigungsstück 12 als Gewindehülse ausgebildet ist, die auf das Abhängeseil 10 aufgeschoben ist und deren Außengewinde in das Innengewinde der Sackbohrung 4 geschraubt ist. Das Abhängeseil weist an seinem Ende ein starr angebrachtes Halteelement 11 auf, welches sich von oben auf dem Befestigungsstück 12, nämlich der Gewindehülse, abstützt. Der durch der Versatz 9 entstandene Freiraum kann mit einer Verputzmasse verfüllt werden, sodass von unten nur mehr das aus der Decke kommende Abhängeseil 10 sichtbar ist.

Fig. 5 und 6 zeigen eine nicht erfindungsgemäße Ausführung des Einschraubteils für eine Hohldecke 13. Das Einschraubteil umfasst eine Schraube 14, die einen Schraubenkopf 15 und einen Schraubenschaft 16 aufweist. Der Schraubenkopf 15 ist mit einem Außengewinde ausgebildet, welches bei der Montage in ein in die Decke 13 ausgebildetes Bohrloch 17 eingedreht wird. Der Schraubenschaft 16 weist ebenfalls ein Außengewinde auf, auf welches eine Trommel 18 aufgeschraubt ist, welche ein Drehlager für den Kippanker 19 ausbildet. Der Kippanker 19 ist demgemäß entsprechend dem Pfeil 20 aus der in Fig. 5 dargestellten, an den Schraubenschaft 16 angelegten Position in die in Fig. 6 dargestellte Position verschwenkbar. Der Kippanker 19 ist im Querschnitt bevorzugt U-förmig ausgebildet, sodass der Schraubenschaft 16 in der in Fig. 5 dargestellten Lage des Kippankers 19 zwischen die beiden Schenkel der U-Form zu liegen kommt.

Der Schraubenschaft 16 wird gemeinsam mit dem Kippanker 19 durch das Bohrloch 17 in den hinter der Decke vorhandenen Hohlraum eingeführt, wie dies in Fig. 5 dargestellt ist. Nach einer 90°-Verschwenkung des Kippankers wird die Schraube 14 z.B. durch Eingriff in den Innensechskant 22 in Einschraubrichtung gedreht, wodurch der Kippanker 19 entsprechend dem Pfeil 21 zur Rückseite der Decke 13 gezogen wird, während der Schraubenkopf 15 noch nicht in das Bohrloch 17 eindringt. Sobald der Kippanker 19 an der Rückseite der Decke 13 anliegt, bewirkt ein weiteres Eindrehen der Schraube 14 ein Heranziehen des Schraubenkopfes 15 zum Bohrloch 17 und ein Eindrehen des Schraubenkopfes 15 in das Bohrloch 17, wobei das Außengewinde des Schraubenkopfes 15 und das Außengewinde des Schraubenschafts 19 dieselbe Gewindesteigung aufweisen. Der Schraubenkopf 15 wird auf diese Weise in der Decke fixiert, wobei wie bei der Ausführung gemäß den Fig. 1-4 ein Versatz 9 vorgesehen sein kann, um den Schraubenkopf im eingeschraubten Zustand mit einer Verputzmasse zu bedecken. Vor dem Verputzen wird jedoch das Abhängeseil 10 mit Hilfe des Befestigungsstücks 12 in einer im Schraubenkopf 15 ausgebildeten Aufnahme befestigt, was auf die gleiche Weise erfolgen kann wie zu den Fig. 1-4 erläutert.

In den Fig. 7 und 8 ist die Befestigung des Abhängeseils 10 gesondert dargestellt. Das Abhängeseil 10 weist an seinem Ende ein Halteelement 11 auf, welches starr an diesem angebracht ist, z.B. durch einen Presssitz, durch Schweißen oder Löten oder dgl. Unterhalb des Halteelements ist eine Gewindehülse 12 angeordnet, welche in das Innengewinde des im Schraubenkopf 23 ausgebildeten Sacklochs eingeschraubt wird. Zur Erleichterung des Einschraubvorgangs kann die Gewindehülse stirnseitig, d.h. an der Unterseite einen Schraubenantrieb aufweisen. Der Schraubenkopf 23 kann, analog zu der Ausbildung gemäß den Fig. 5 und 6, Teil einer Schraube samt Schraubenschaft sein oder alternativ für sich selbst das erfindungsgemäße Einschraubteil darstellen. Im letzteren Fall stellt das Zusammenwirken des Außengewindes des Einschraubteils 23 mit dem Bohrloch der Decke alleine die erforderlichen Haltekräfte bereit.

Bei der Ausführung gemäß den Fig. 9 und 10 ist das Einschraubteil ebenfalls nur von einem schraubenkopfartigen Teil 24 gebildet. Die Befestigung des Abhängeseils 10 erfolgt hier mit Hilfe einen Pressitzes zwischen einem als Pressteil 25 ausgebildeten Befestigungsteil am Ende des Seils 10, der beim Einschlagen mittels eines z.B. geschlitzten Durchschlages kraft- und formschlüssig einen Spreiz-Innenteil 26 verformt.

## Patentansprüche

1. Abhängevorrichtung zum Abhängen von Gegenständen, wie z.B. Leuchten, von einer Raumdecke, umfassend ein deckenseitiges Aufnahmeteil und ein an diesem befestigbares Abhängemittel (10), wie z.B. ein Abhängeseil, **dadurch gekennzeichnet, dass** das deckenseitige Aufnahmeteil als in die Decke versenkbares Einschraubteil (1, 23, 24) ausgebildet ist, welches als Schraube (1) mit einem Außengewinde zum Einschrauben in die Raumdecke (13) oder einen in der Raumdecke angeordneten Dübel (8) ausgebildet ist und eine nach unten offene Aufnahme (4, 26) aufweist, und dass das Abhängemittel (10) ein Befestigungsstück (12, 25) aufweist, welches von unten in die Aufnahme (4, 26) einführbar ist.

2. Abhängevorrichtung nach Anspruch 1, **dadurch gekennzeichnet, dass** die Aufnahme (4, 26) und das Befestigungsstück (12, 25) miteinander zusammenwirkende Verbindungsmittel aufweisen.

3. Abhängevorrichtung nach Anspruch 2, **dadurch gekennzeichnet, dass** die Verbindungsmittel zur Herstellung einer Gewindeverbindung, einer magnetischen Verbindung oder einer stoffschlüssigen Verbindung ausgebildet sind.

4. Abhängevorrichtung nach Anspruch 2, **dadurch gekennzeichnet, dass** das Abhängemittel (10) an seinem Ende ein Halteelement (11) aufweist, welches eine Anlagefläche für das Verbindungsmittel bzw. das Befestigungsstück (12) des Abhängemittels (10) ausbildet.

5. Abhängevorrichtung nach einem der Ansprüche 1 bis 4, **dadurch gekennzeichnet, dass** das Verbindungsmittel des Einschraubteils (1, 23) ein in der Aufnahme (4) ausgebildetes Sackloch mit einem Innengewinde aufweist.

6. Abhängevorrichtung nach einem der Ansprüche 1 bis 5, **dadurch gekennzeichnet, dass** das Einschraubteil als Stiftschraube (1) ausgebildet ist, die in einem gewindelosen Endbereich (3) mit der Aufnahme (4) für das Abhängemittel (10) versehen ist.

7. Einschraubteil (1, 23, 24), welches eine nach unten offene Aufnahme (4, 26) aufweist, zur Verwendung in einer Abhängevorrichtung gemäß den Ansprüchen 1 bis 6.
